# EUROPEAN PATENT SPECIFICATION

(11) **EP 0 855 708 B1**
(45) Date of publication and mention of the grant of the patent: **02.05.2002**
(21) Application number: 98300172.8
(22) Date of filing: 12.01.1998
(51) Int. Cl.: G11B 17/04

(54) **Disc device**
Plattengerät
Appareil à disque

(30) Priority: 23.01.1997 JP 992997
(43) Date of publication of application: 29.07.1998
(73) Proprietor: ALPS ELECTRIC CO., LTD., Ota-ku Tokyo 145 (JP)
(72) Inventor: Yamashita, Tatsumaro, Shibata-gun, Miyagi-ken (JP); Ishii, Sadayuki, Koriyama-shi, Fukushima-ken (JP)
(74) Representative: Kensett, John Hinton

(56) References cited:
- EP-A- 0 200 705
- EP-A- 0 273 510
- EP-A- 0 509 531
- EP-A- 0 518 259
- EP-A- 0 645 768
- EP-A- 0 696 797
- FR-A- 2 538 597
- PATENT ABSTRACTS OF JAPAN vol. 018, no. 117 (P-1699), 24 February 1994 & JP 05 303816 A (NIPPON COLUMBIA CO LTD), 16 November 1993,

## Description

The present invention relates to a disc device into which a cartridge in which a disc is accommodated or a single body disc which is not accommodated in a cartridge is inserted, and more specifically, to a disc device which permits a mechanism to be simplified and the size and thickness of the device to be reduced.

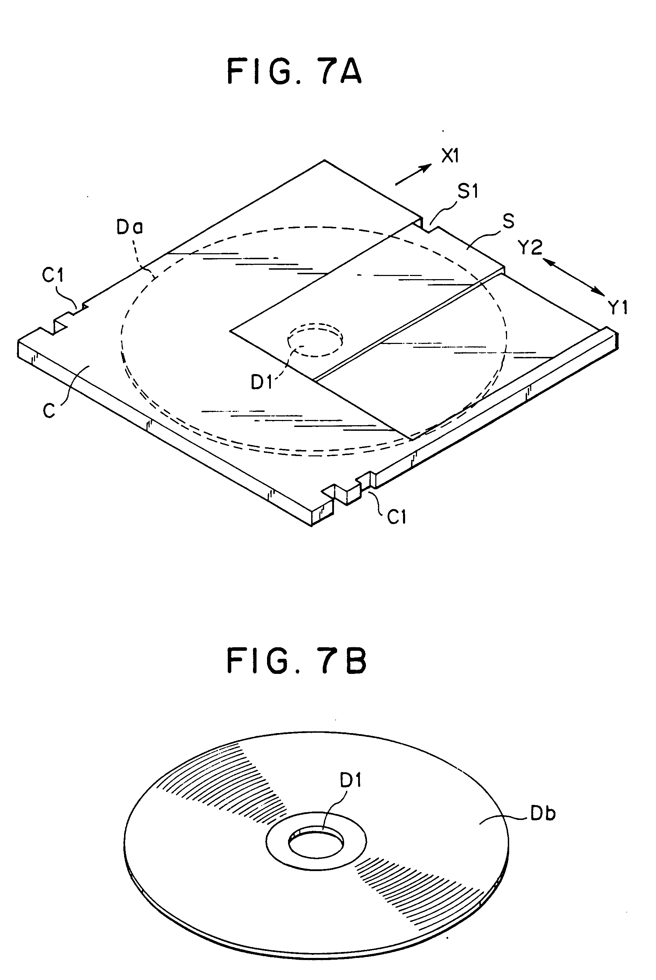

Examples of disc devices of the prior art are a disc DA accommodated in a cartridge C as shown in FIG. 7A and a single body disc Db which is not accommodated in a cartridge as shown in FIG. 7B as a photo recording medium, a photomagentic recording medium or a phase change recording medium.

First, as a disc device on which the single body disc Db shown in FIG. 7 B is to be loaded, there is a device provided with a tray which projects forwardly of the device, the device being arranged such that the tray is retracted into the device after the disc Db is loaded thereon and the disc Db is clamped to the turntable of a drive unit.

In an in-car CD player and the like, transfer rollers are disposed inwardly of an inserting port, the disc Db inserted from the inserting port is retracted into the device by the rotating force of the transfer rollers, the center of the disc Db is placed on a turntable and the disc Db having been replayed is discharged from the inserting port by the transfer rollers.

Next, as a disc device on which the cartridge C shown in FIG. 7A is to be loaded, there is a disc device arranged such that the cartridge C is inserted into the device by being pushed by hand, the disc Da in the cartridge C is placed on a turntable and the cartridge C is discharged from the device by the operating force of a discharge lever which is disposed to the outside of the device and actuated by hand.

Further, as the disc device on which the cartridge C is to be loaded, there is a device arranged such that when the cartridge C is inserted, a retracting member is hooked to the cartridge C, the cartridge C is retracted into the device by the power of a motor, and when a playback or the like is finished, the cartridge C is discharged by the reverse actuating force of the retracting member.

First, in the disc device arranged such that the single body disc Db shown in FIG. 7B is loaded thereon and the tray projects forwardly of the device, an operating space corresponding to the projecting distance of the tray must be provided in front of the device and a keyboard and a mouse prevents the projection of the tray in, for example, a computer. Further, since a space for accommodating the tray must be secured in the device, the size thereof is increased. Whereas, in the device in which the single body disc Db is retracted and discharged by the transfer rollers, the device is made complex by the transfer rollers and the size thereof is increased by the space occupied by the transfer rollers.

Further in the device on which the single body disc Db is to be loaded, there is no hand-operated (manual) device which permits the disc to be inserted by being pushed by hand and discharged by the force of a discharge lever or the like because the single body disc Db must be carefully handled. Thus, since the aforesaid automatic loading system cannot help being employed, it cannot be avoided that the mechanism of the device is made complex and the size thereof is increased.

Next, when the automatic loading system is employed to the disc device on which the cartridge C shown in FIG. 7A is to be loaded, although it is necessary to retract the cartridge C into the device by hooking the retracting member to the recess C1 of the cartridge C, a complex mechanism must be employed to securely hook the retracting member to the recess C1. Further, the retracting member must be disposed to both the sides of the cartridge to be inserted, by which the size of the device is increased.

On the other hand, in the manual disc device in which the cartridge C is inserted by the force of hand and discharged by the force obtained by actuating the discharge level or the like, since the force necessary to actuate the discharge lever and the like must be made small and a sufficient discharge stroke must be secured, the mechanism in the device is made very complex.

Further, when a disc device is arranged to permit both the cartridge C shown in FIG. 7A and the single body disc shown in FIG. 7B to be loaded thereon, since the size of the cartridge C is different from that of the disc Db and a position in the device to which the inserting side end of them is inserted is different depending upon the cartridge C and the disc Db, it is difficult to arrange the device to permit both of the cartridge C and the disc Db to be securely inserted and discharged. Another disc player is disclosed in European Patent EP-A-0518259. This document teaches a playback apparatus which is adapted to receive both a single disk via a disk tray, or a disk cartridge via a cartridge carrier. This player provides separate insertion slots for both disk and cartridge; one positioned above the other on the facia of the player.

An object of the present invention for solving the problems of the prior art is to provide a disc device into which a cartridge or a single body disc can be inserted and discharged by a simple mechanism and further can be made small and thin in size.

Another object of the present invention is to provide a disc device which can securely position both a cartridge and a disc and securely discharge them even if the device is arranged to permit both of them to be inserted thereinto.

The present invention provides a disc device into which both a cartridge (C) in which a disk (Da) is accommodated and a single disc (Db) which is not accommodated in a cartridge can be inserted, the device comprising a moving member (7) moved toward the inner side of the device (X1-direction) by the press force of the cartridge or the single body disc inserted from an inserting port (4); an urging member (13) for urging the moving member (7) in the direction of the inserting port (4); a turntable (23) and a clamper (5) for clamping the center of the disc in the inserted cartridge or the center of the inserted single body disc; positioning members (53,54) for positioning the cartridge or the single body disc to the turntable (23) and the clamper (5); characterized by: a control member (31) for driving the positioning members (53,54) in a positioning direction as well as driving the turntable (23) or the clamper (5) in a clamp direction by the moving force produced when the cartridge or the disc is moved in a predetermined direction at the time it is inserted; and a restoring motor (38) for moving the control member (31) in the direction opposite to the predetermined direction and returning it to an initial position on the completion of the drive of the disc, wherein when the control member (31) is returned to the initial position by the restoring motor (38), the positioning executed by the positioning members (53, 54) is released as well as the clamp executed by the turntable (23) and the clamper (5) is released, whereby the cartridge or the single body disc is discharged by the moving member (7).

The above disc device may comprise a spring (33) for urging the control member (31) in the predetermined direction and a locking member (44) for holding the control member (31) to the initial position against the urging force of the spring (33), wherein the control member (31) locked by the locking member (44) is released by the moving force of the cartridge or the single body disc.

The disc device may comprise a lock release member (41) for moving the lock member (44) in a lock release direction, wherein when the moving member (7) is moved to a predetermined position on the inner side of the device, the lock release member (41) is moved in a lock releasing direction by the moving member (7), whereby the control member (31) locked by the lock member (44) is released.

Further, it is preferable that a rack (31b) is formed to the control member (31), a gear (35) driven by the restoring motor (38) is meshed with the rack (31b), and when the control member (31) is driven in the predetermined direction by the elastic force of the spring (33), the restoring motor (38) is deenergized, whereby the control member (31) is moved in the predetermined direction by the elastic force of the spring (33) without being applied with the energizing load of the restoring motor (38).

In the example shown by the drawings of the present invention, when the control member (31) is urged by the urging force of the spring (33) and the lock member (44) being locked is released, the control member (31) is moved in the predetermined direction by the force of the spring (33). However, the control member (31) may be moved by the push force generated when the cartridge C or the single body disc Db is inserted or by being pushed by the moving member (7) in place of the force of the spring and the positioning operation and the clamp operation of it may be carried out by the moving force of the control member (31) at the time. That is, the control member (31) is directly or indirectly driven by the inserting force of the cartridge or the single body disc or by the release of the lock executed when it is inserted.

When the disc is to be clamped, the turntable (23) may be moved in the clamp direction or the clamper (5) may be driven in the clamp direction on the contrary.

In the present invention, when the cartridge or the single body disc is inserted, the positioning operation or the clamp operation thereof is carried out by the operation of the control member (31) executed by the insertion and it is discharged by driving the control member (31) by the restoring motor (38). Therefore, since it suffices only to transmit the power of the motor to the control member (31), the mechanism of the disc device is simplified as well as the size thereof can be reduced and thinned. Moreover, the discharge operation can be securely carried out.

In particular, when the disc device is arranged such that the locked control member (31) is released by the moving force of the moving member (7) to the inner side of the device and the control member (31) is moved by the spring (33), the disc device can be arranged so as to loaded with both the cartridge C and the single body disc Db. That is, since it is sufficient only to release the locked control member (31) when the cartridge C or the single body disc Db is inserted, the control member (31) can be operated even if the position of the extreme end of the cartridge C in the device when it moves to the inner side of the device is different from that of the disc Db.

Note, the locked control member may be directly released by the moving force of the cartridge or the single body disc. That is, the lock release member (41) may be operated by being pushed by the cartridge or the single body disc and the lock may be released by the lock member (44).

Further, when the restoring motor (38) is not energized when the cartridge or the single body disc is inserted, the load when the control member (31) is operated by the force of the spring (33) can be reduced.

Embodiments of the invention will now be described, by way of example only, with reference to the accompanying drawings, in which:
FIG. 1 is an exploded perspective view of a disc device of the present invention;
FIG. 2A is a plan view mainly showing the upper half section of the disc device and FIG. 2B is a side elevational view of the disc device;
FIG. 3A is a plan view mainly showing the lower half section of the disc device and FIG. 3B is a side elevational view of the disc device;
FIG. 4A and FIG. 4B are partial plan views showing the turning operation of a lock release member for respective turning angles;
FIG. 5 is a partial plan view showing the state that the lock release member most turns clockwise;
FIG. 6A and FIG. 6B are partial plan views showing the respective operating states when a positioning arm is driven by a control member; and
FIG. 7A is a perspective view showing a cartridge in which a disc is accommodated and FIG. 7B is a perspective view showing a single body disc.

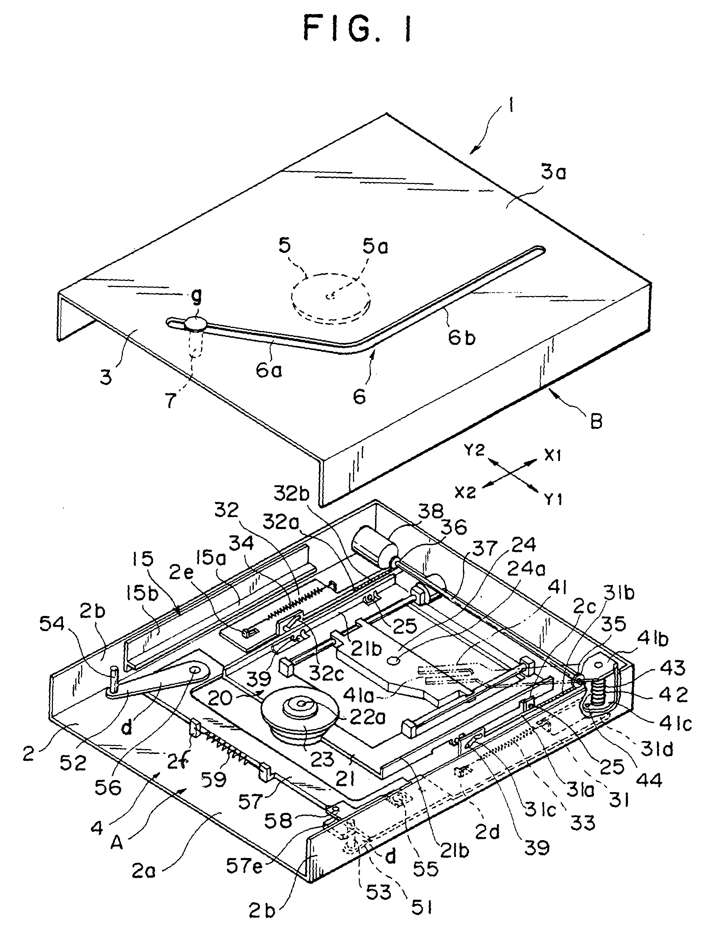

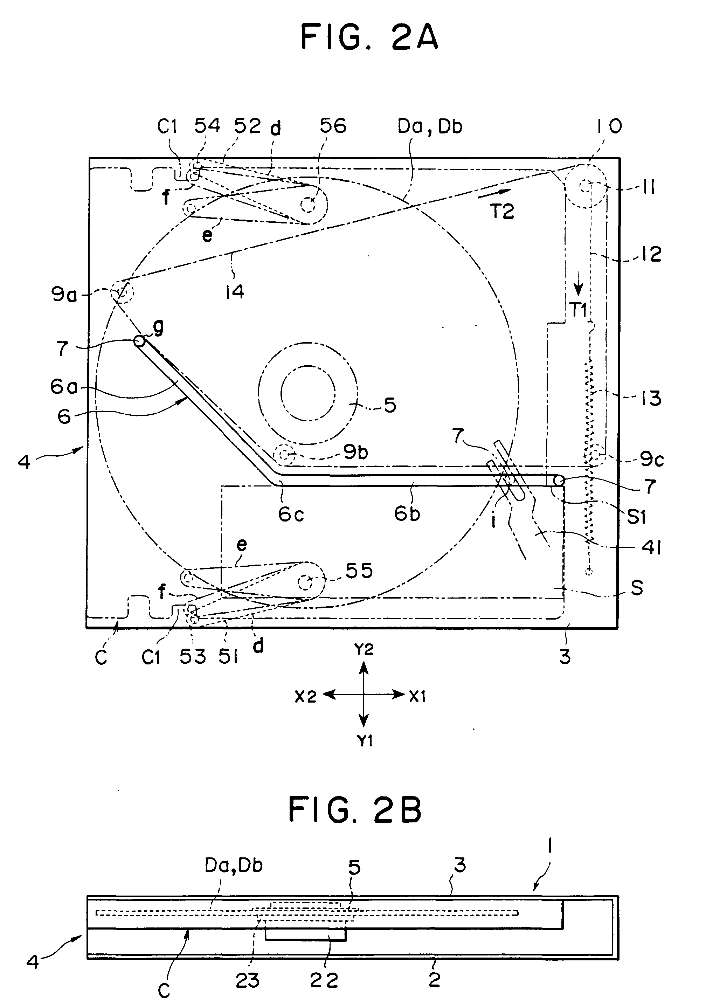

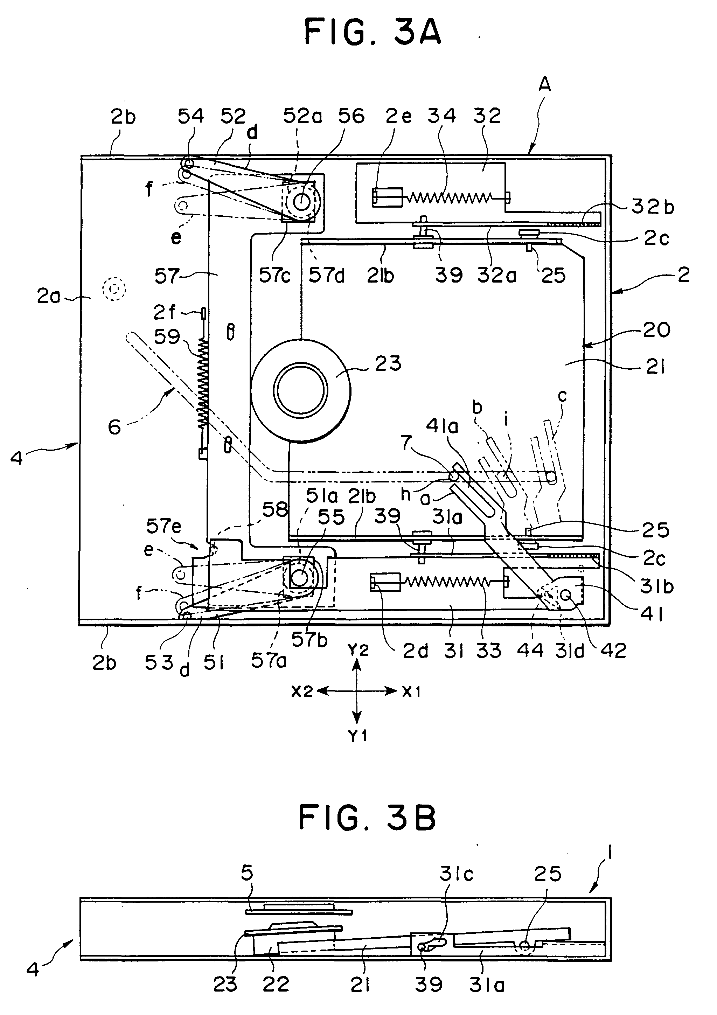

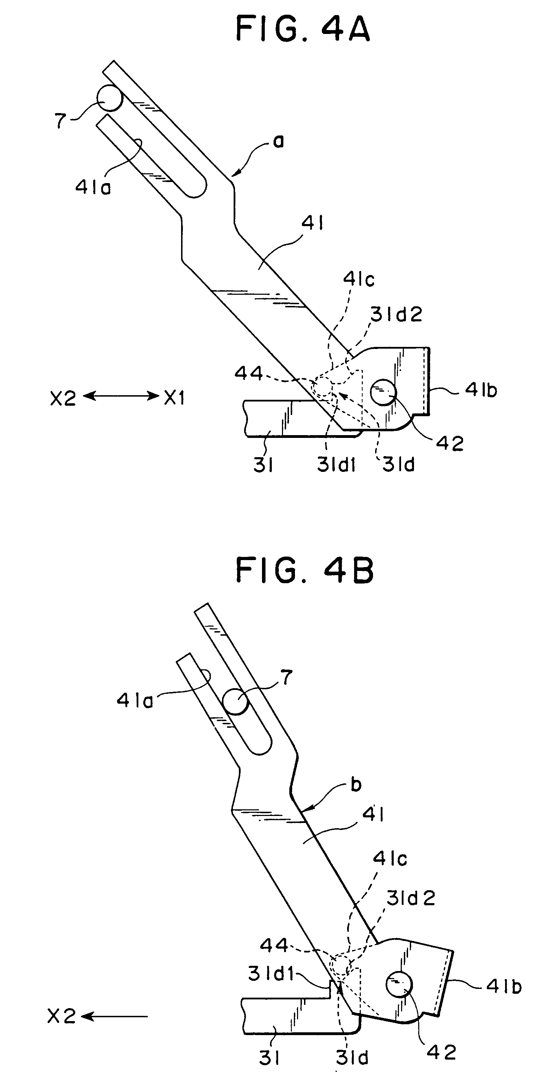

FIG. 1 is an exploded perspective view showing the structure of a disc device of the present invention, FIG. 2A is a plan view mainly showing the structure of the upper half section B of the disc device, FIG. 2B is a side elevational view of the disc device, FIG. 3A is a plan view mainly showing the lower half section A of the disc device, FIG. 3B is a side elevational view of the disc device and FIG. 4 to FIG. 6 are views describing partial operations.

The disc device can load both a cartridge C in which a disc Da is accommodated as shown in FIG. 7A and a single body disc Db which is not accommodated in a cartridge as shown in FIG. 7B on it. The disc Da accommodated in the cartridge C and the single body disc Db are, for example, a power disc (PD), a digital video disc, a CD-ROM and the like.

As shown in FIG. 1, the disc device is composed of the lower half section A and the upper half section B. The disc device arranged by combining the lower half section A and the upper half sect-ion B is as thin type disc device as shown in FIG. 2B and FIG. 3B.

The disc device has a cabinet 1 which is divided into the lower cabinet 2 of the lower half section A and the upper cabinet 3 of the upper half section B. The combination of the lower cabinet 2 with the upper cabinet 3 results in the thin box-shaped cabinet 1 with an inserting port 4 opened on the left side in the figures as shown in FIG. 2A and FIG. 3B. The cartridge C shown in FIG. 7A or the disc Db shown in FIG. 7B is inserted into the cabinet 1 in an X1-direction from the inserting port 4.

As shown in FIG. 1, the upper cabinet 3 has a ceiling plate 3a on which a clamper 5 is rotatably supported by a shaft 5a as well as the shaft 5a and the clamper 5 are elastically pressed in the direction of the lower cabinet 2 by a leaf spring (not shown).

A guide 6 is formed to the ceiling plate 3a of the upper cabinet 3 of the upper half section B. The guide 6 is formed to a slot shape and has an inclining guide portion 6a located on the inserting port 4 side which obliquely extends in the X1-direction which is the direction in which the cartridge C and the like are inserted as well as in a Y1-direction which is perpendicular to the above inserting direction and a linear guide portion 6b which is continuous to the inclining guide portion 6a and extends in the X1-direction in parallel therewith. A pin-shaped moving member 7 serving as a release/discharge member is inserted into the guide 6 so as to be movable in the slot of the guide 6.

As shown in FIG. 2A, small pulleys 9a, 9b, 9c are rotatably supported on the lower surface of the ceiling plate 3a of the upper cabinet 3 and further an urging pulley 10 is rotatably supported at the corner of the upper cabinet 3 which is an end thereof in the X1-direction and in the Y1-direction. A wire 14 is trained around the small pulleys 9a, 9b, 9c and an urging pulley 10 so as to be caused to travel by the rotation of the urging pulley 10 by being wound around it. Then, the moving member 7 is fixed to a position of the wire 14.

A small diameter pulley 11 is formed integrally with the urging pulley 10, an end of an urging wire 12 is fixed to the small diameter pulley 11 as well as the urging wire 12 is trained around the small diameter pulley 11. A discharge spring 13 as an urging member is hooked between the other end of the urging wire 12 and the upper cabinet 3. The urging wire 12 is pulled by the contracting force of the discharge spring 13 so that the small diameter pulley 11 and the urging pulley 10 formed integrally therewith are urged clockwise. As a result, the wire 14 is urged so as to travel clockwise and the moving member 7 fixed to the wire 14 is pressed against the end of the guide 6 on the inserting port 4 side thereof.

Clockwise urging torque resulting from the elastic pulling force of the discharge spring 13 is applied to the small diameter pulley 11 and the wire 14 is trained around the large diameter urging pulley 10. As a result, the moving distance of the moving member 7 along the guide 6 is set long and the expanding/contracting size of the discharge spring 13 is set short by the difference between the diameter of the urging pulley 10 and that of the small diameter pulley 11. Thus, since the discharge spring 13 which is short as compared with the moving distance of the moving member 7 can be used, the discharge spring 13 can be disposed so as to expand in the width direction (Y-direction) of the upper cabinet 3 as shown in FIG. 2A. Further, since the tension T1 applied to the urging wire 12 by the discharge spring 13 is smaller than the tension T2 applied to the wire 14 by the urging pulley 10, when the cartridge C or the disc Db is inserted from the inserting port 4 and pushes the moving member 7 in the X1-direction, a resistance force applied to the cartridge C or the disc Db from the moving member 7 is reduced. Accordingly, the cartridge C or the disc Db can be pushed into the inserting port 4 or the cabinet 1 with a light force.

As shown in FIG. 1, guide members 15 are fixed on the insides of both the side plates 2b, 2b of the lower cabinet 2 which constitutes the lower half section A. Note, FIG. 1 shows only the guide member 15 fixed on one of the side plates 2b. The guide member 15 is formed of a plastic material having a small coefficient of friction and composed of a lower guide wall 15a for supporting the lower surface of the cartridge C or the disc Db and a side guide wall 15b, which is integrally formed with the lower guide wall 15a, for guiding a side of the cartridge C or the disc Db. The lower guide wall 15a is located approximately at an intermediate part of the side plate 2b of the lower cabinet 2 in the height direction thereof and the cartridge C or the disc Db inserted from the inserting port 4 is guided to the upper region in the cabinet 1 by the guide member 15 as shown in FIG. 2B.

As shown in FIG. 1, the unit chassis 21 of a disc drive unit 20 is disposed on the bottom plate 2a of the lower cabinet 2. As shown in FIG. 3B, the unit chassis 21 is formed by bending a sheet material to a C-shape and provided with a thin spindle motor 22 as shown in FIG. 3B at the end thereof on the inserting port 4 side and a turntable 23 is fixed to the rotatable shaft 22a of the spindle motor 22. Note, the clamper 5 disposed under the ceiling plate 3a of the upper cabinet 3 is positioned just above the turntable 23. Further, an optical head 24 is supported by the unit chassis 21 so as to move in an X1 - X2 direction and provided with an objective lens 24a. A threat motor (not shown) is disposed on the unit chassis 21 to move the optical head 24 in the X1 - X2 direction.

Support shafts 25 are inserted into both the side plates 21b of the unit chassis 21 on the inner side (X1-side) of the device. Support pieces 2c are formed to the bottom plate 2a of the lower cabinet 2 by being cut and raised therefrom and the support shafts 25 are fixed to the support pieces 2c. With this arrangement, the unit chassis 21 of the disc drive unit 20 can be turned around the support shafts 25 disposed to the inner side of the device.

A pair of plate-shaped control members 31, 32 are disposed on the bottom plate 2a of the lower cabinet 2 and supported so as to slide in the X1 - X2 direction, respectively. A coil spring 33 as an urging member is hooked between one of the control members or the control member 31 and a spring hook 2d cut and raised from the bottom plate 2a of the lower cabinet 2 and the control member 31 is urged in the X2-direction by the coil spring 33. Likewise, a coil spring 34 as an urging member is also hooked between the other control member 32 a spring hook 2e cut and raised from the bottom plate 2a of the lower cabinet 2 to thereby urge the control member 32 in the X2-direction.

A folded piece 31a which is raised vertically is formed integrally with one of the control members or the control member 31 and a rack 31b is formed to the edge of the folded piece 31a on the X1-side thereof. Likewise, a folded piece 32a which is raised vertically is formed to the other control member 32. A rack 32b is formed to the upper side end of the folded piece 32a on the X1-side thereof.

As shown in FIG. 1, a shaft 37 extending in the y-direction is rotatably supported at the end of the lower cabinet 2 on the X1-side thereof. Although the shaft 37 is supported by the lower cabinet 2, a mechanism for supporting it is not shown. A gear 35 is fixed to an end of the shaft 37 and a gear 36 is fixed to the other end thereof. The gear 35 is meshed with the rack 31b of one of the control members or the control member 31 and the gear 36 is meshed with the rack 32b of the other control member 32. The pair of control members 31, 32 are coupled with each other by the gears 35, 36 and the shaft 37 so that they move in the X1 - X2-direction in synchronism with each other.

A restoring motor 38 is disposed to the inner side in the X1-direction of the lower cabinet 2 and the gear provided with the output shaft of the restoring motor 38 is meshed with the gear 36. When the restoring motor 38 is not energized, the pair of control members 31, 32 can be moved in the X2-direction by the elastic forces of the coil springs 33, 34 regardless of the load of the restoring motor 38, whereas when the restoring motor 38 is energized, the gears 36 and 35 are driven to thereby transmit a moving force to the racks 31b and 32b so that the respective control members 31 and 32 are retracted in the X1-direction.

As shown in FIG. 1 and FIG. 3B, a crank-shaped driving hole 31c as a driving unit is formed to the folded piece 31a of the control member 31 to drive the disc drive unit 20 in a clamp direction and a crank-shaped driving hole 32c as a driving unit is also formed to the folded piece 32a of the control member 32. Pins 39, 39 are fixed to both the side plates 21b, 21b of the unit chassis 21 and inserted into the driving holes 31c and 32c, respectively. As shown in FIG. 1 and FIG. 3B, when the control members 31 and 32 move in the X1-direction, the pins 39, 39 are lowered by the driving holes 31c and 32c, the unit chassis 21 is turned downward around the supports shaft 25, 25 and the turntable 23 is positioned below the insertion/guide region of the cartridge C or the disc Db. When the control members 31 and 32 move in the X2-direction, the pins 39, 39 are lifted by the crank-shaped driving hole 31c and 32c, so that the unit chassis 21 is turned upward and the disc can be clamped between the turntable 23 and the clamper 5.

A lock release member 41 (lock release arm) is disposed at the corner of the lower cabinet 2 on the X1-and Y1-sides. The lock release member 41 is rotatably supported by a support shaft 42 at the base end thereof. A lock spring 43 composed of a torsion spring is disposed to the outer periphery of the support shaft 42 and the lock release member 41 is urged counterclockwise by the lock spring 43 on the plan view shown in FIG. 3A (in the direction shown by a solid line a in FIG. 3A).

An engaging groove 41a is formed to the extreme end of the lock release member 41, and when the moving member 7 which slides along the guide 6 moves to the inner portion of the device as shown in FIG. 3A, it is engaged with the engaging groove 41a.

As shown in FIG. 1, a folded section 41b which is folded in the direction of the bottom plate 2a is formed to the base end of the lock release member 41 and the lower end of the folded section 41b is folded in a direction parallel with the bottom plate 2a and arranged as a lock section 41c. A lock pin 44 as a lock member which extends in the direction of the bottom plate 2a is fixed to the extreme end of the lock section 41c.

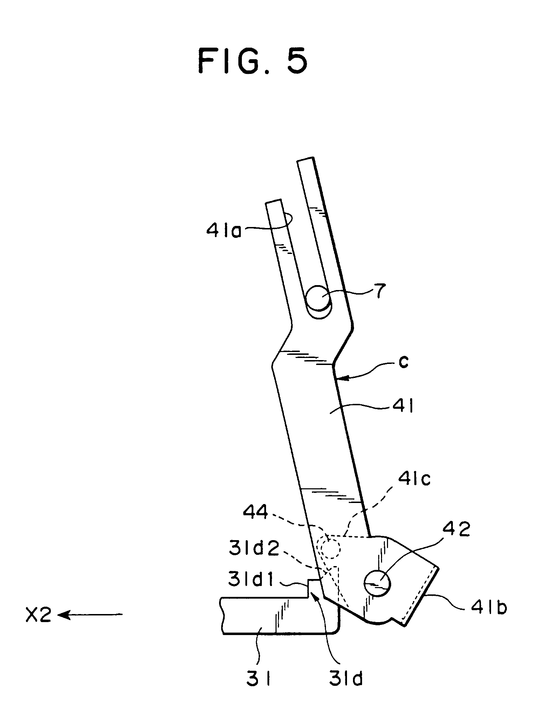

As shown in FIG. 4A, FIG. 4B and FIG. 5, a hook 31d is formed to the end of the control member 31 on the X1-side thereof. The hook 31d is composed of a first stage hook 31d1 and a second stage hook 31d2 which is formed to an inclining side.

When the lock release member 41 is turned to the attitude shown by the solid line a in FIG. 3A, the lock pin 44 is hooked to the first stage hook 31d1 as shown in FIG. 4A and the control member 31 is locked at a position which is moved to the X1-side. When the cartridge C or the disc Db is inserted from the inserting port 4 and the moving member 7 is pushed into the inner side of the device (X1- direction) by it, the moving member 7 begins to enter the engaging groove 41a of the lock release member 41 in the attitude shown by a. When the moving member 7 is further pushed into the inner portion of the device (X1-direction), the lock release member 41 is turned clockwise by the moving member 7. When the lock release member 41 is turned to a position b shown in FIG. 3A, the lock pin 44 is hooked to the second stage hook 31d2 as shown in FIG. 4B. When the control member 31 is moved in the X2-direction by the elastic force of the coil spring 33 thereafter, the lock pin 44 is guided to the inclining second stage hook 31d2 and the lock release member 41 is further turned a little clockwise from the position b.

When the disc Db is inserted, the lock release member 41 is turned up to the position b and further turned a little clockwise from the position b, whereas when the cartridge C is inserted, the moving member 7 is pushed up to the terminal end of the guide 6 on the X1-side thereof and the lock release member 41 is turned up to a position c. FIG. 5 shows the state that the lock release member 41 is turned to the position c.

A pair of positioning arms 51, 52 are disposed to both the sides in the Y1-direction and the Y2-direction of the lower cabinet 2 on the inserting port 4 side thereof. Positioning pins (positioning members) 53, 54 which extend upward are fixed to the extreme ends of the positioning arms 51, 52, respectively. Further, the base ends of the respective positioning arms 51, 52 are rotatably supported by support shafts 55, 56 fixed to the bottom plate 2a of the lower cabinet 2.

An associating lever 57 which extends in the Y1 - Y2 direction and is supported so as to slide in the direction is interposed between the positioning arms 51, 52. An associating spring 59 composed of a coil spring is interposed between the associating lever 57 and a support piece 2f cut and raised from the bottom plate 2a and the associating lever 57 is urged in the Y2-direction by the associating spring 59.

As shown in FIG. 3A, a square hole 47a is formed to the end of the associating lever 57 on the Y1-side thereof and the support shaft 55 which supports the base end of the positioning arm 51 is positioned in the square hole 57a. A rack 57b is formed to the edge of the square hole 57a on the X2-side thereof and a gear 51a which is fixed to the base end of the positioning arm 51 integrally therewith around the support arm 55 is meshed with the rack 57b. A square hole 57c is also formed to the end of the associating lever 57 on the Y2-side thereof and the support shaft 56 which supports the base end of the positioning arm 52 is positioned in the square hole 57c. A rack 57d is formed to the edge of the square hole 57c on the X1-side thereof which is opposite to the square hole 57a. A gear 52a is fixed to the base portion of the positioning arm 51 integrally therewith around the support shaft 56 and meshed with the rack 57d.

When the associating lever 57 moves in the Y1-direction, the positioning arm 51 is turned counterclockwise and the positioning arm 52 is turned clockwise by the mesh of the rack 57b with the gear 51a and the mesh of the rack 57d with the gear 52a, so that the positioning pin 53 and the positioning pin 54 are separated from each other. Whereas, when the associating lever 57 moves in the Y2-direction, the positioning arm 52 is turned clockwise and the positioning arm 52 is turned counterclockwise, so that the positioning pin 53 and the positioning pin 54 approach each other.

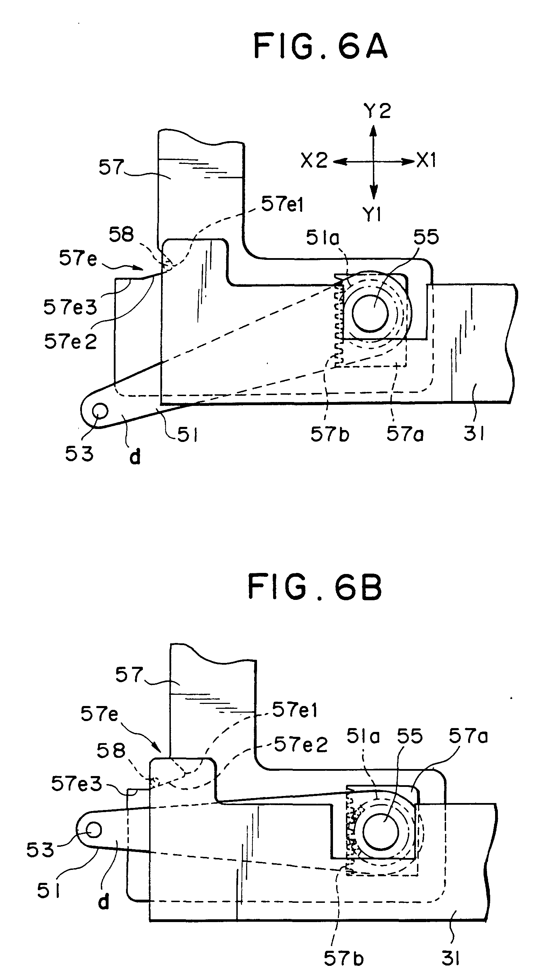

As shown in FIG. 6A and FIG. 6B, a regulating section 57e is formed to the edge of the associating lever 57 on the Y1-side thereof. The regulating section 57e is composed of a V-shaped valley portion 57e1, an inclining portion 57e2 and a linear portion 57e3 extending in the X1 - X2 direction. A regulating ping 58 which extends toward the bottom plate 2a is provided with the end of the control member 31 on the X2-side thereof and can be engaged with the regulating section 57e.

FIG. 6A shows the state that the control member 31 moves most in the X1-direction and at the time the regulating ping 58 is engaged with the valley portion 57e1 of the regulating section 57e and the associating lever 57 moves in the Y1-direction and is held there. At the time, the positioning arms 51, 52 turns to a position d. When the control member 31 moves in the X2-direction, the regulating ping 58 slides along the inclining portion 57e2 and reaches the boundary to the linear portion 57e3. At the time, the associating lever 57 is moved in the Y2-direction by the urging force of the associating spring 59. At the time, the positioning arms 51, 52 turns to a position e. When the control member 31 further moves in the X2-direction from the position shown in FIG. 6B, the regulating ping 58 slides along the linear portion 57e3 and the position of the associating lever 57 and the turning attitudes of the respective positioning arms 51, 52 are not changed from those shown in FIG. 6B.

Next, operation of the disc device will be described.

The disc device can be loaded with both the cartridge C in which the disc Da is accommodated as shown in FIG. 7A and the single body disc Db as shown in FIG. 7B. The discs Da and Db have the same diameter and same inside diameter of the center hole D1 thereof.

The cartridge C shown in FIG. 7A includes a shutter S at the end thereof on the X1-side which is an inserting direction and the shutter S can slide in the Y-direction and is urged in a closing direction (Y2-direction) by a spring. When the shutter S is slid in the Y1-direction, a window is opened to the cartridge C and the center hole D1 and the disc surface of a disc D appear from the window.

### (Waiting State)

In a waiting state, the moving member 7 disposed to the upper cabinet 3 is located at a position shown by g at the end of the guide 6 on the X2-side. An urging force in the X2-direction is applied to the moving member 7 by the elastic force of the discharge spring 13.

Although the control members 31, 32 are coupled with each other by the gears 35, 36 and the shaft 37 and moved in synchronism with each other, both the control members 31 and 32 move in the X1-direction in an initial state. The lock release member 41 is turned to an attitude a by being urged counterclockwise by the lock spring 43. As shown in FIG. 4A, the lock pin 44 disposed to the base end of the lock release member 41 is hooked to the first stage hook 31d1 of the hook 31d formed to the control member 31 and locked to a position to which the control member 31 moved in the X1-direction.

At the time, as shown in FIG. 6A, the regulating ping 58 disposed to the end of the control member 31 on the X2-side is engaged with the valley portion 57e1 of the regulating section 57e formed to the associating lever 57 and the associating lever 57 is held at a position to which it was retracted in the Y1-direction against the tension of the associating spring 59. With this operation, the positioning arm 51 is turned counterclockwise by the rack 57b disposed to the associating lever 57 on the Y1-side and the positioning arm 52 is turned clockwise by the rack 57d disposed to the associating lever 57 on the Y2-side, so that both the positioning arms 51, 52 are located at the position d and the respective positioning pins 53, 54 are separated from each other. Thus, the positioning pins 53, 54 do not prevent the insertion of the disc Db or the cartridge C.

The disc device is arranged as a manual slot-in system in which the disc Db or the cartridge C is inserted from the inserting port 4 in the X1-direction by being manually pushed by the operator without energizing the restoring motor 38 at the time of insertion.

### (Loading Operation of Disc Db)

First, operation for inserting the single body disc Db will be described.

The disc Db is inserted from the inserting port 4 into the cabinet 1 and introduced onto the lower guide walls 15a of the guide members 15 disposed to both the side plates 2b, 2b of the lower cabinet 2.

When the disc Db is inserted into the inserting port 4, the extreme end thereof is abutted against the moving member 7 located at the position g. When the disc Db is further pushed by hand, the moving member 7 is pushed by the edge in the X1-direction of the disc Db and the moving member 7 is moved in the X1-direction while sliding along the guide 6 in accordance with the insertion of the disc Db. During the above operation, the wire 14 travels counterclockwise to thereby turn the urging pulley 10 counterclockwise, so that the urging wire 12 is wound around the small diameter pulley 11 formed integrally with the urging pulley 10 and the discharge spring 13 is extended.

When the moving member 7 is pushed up to a position h shown in FIG. 3A by the edge in the X1-direction of the disc Db, the moving member 7 begins to enter the engaging groove 41a of the lock release member 41 located at the position a. The centering operation and clamping operation of the disc Db are continuously carried out while the disc Db is pushed in the above state and the moving member 7 moves up to a position i.

When the moving member 7 is pushed in the X1-direction from the position h, it is turned by the force with which the lock release member 41 engaged with the engaging groove 41a pushes the disc Db, and when the moving member 7 reaches the position i, the lock release member 41 is turned up to a position b. At the time, the lock pin 44 disposed to the base of the lock release member 41 is released from the first stage hook 31d1 of the hook 31d of the control member 31 and reaches the second stage hook 31d2. The above process is shown in FIG. 4A to FIG. 4B. With this operation, the control member 31 is moved in the X2-direction a short distance by being pulled by the coil spring 33. Since the restoring motor 38 is not energized at the time, a load is imposed on the gears 35, 36 in a small amount. Thus, the gear 35 is driven by the rack 31b when the control member 31 moves in the X2-direction and the control member 32 is also moved in the X2-direction together with the control member 31 by the other gear 36 in response to the urging force of the coil spring 34.

When the control member 31 moves the short distance in the X2-direction from the position shown in FIG. 4A to the position shown in FIG. 4B, the regulating ping 58 fixed to the end of the control member 31 on the X2-side is removed from the valley portion 57e1 of the regulating section 57e, whereby the associating lever 57 is moved in the Y2-direction by being pulled by the associating spring 59. When the lock release member 41 turns to the position b shown in FIG. 4B, the position of the control member 31 coincides with the position shown in FIG. 6B. In FIG. 6B, the regulating ping 58 is located to the boundary between the inclining portion 57e2 and the linear portion 57e3 of the regulating section 57e. Since the associating lever 57 is pulled in the Y2-direction by the associating spring 59 in the process from FIG. 6A to FIG. 6B, the positioning arm 51 is turned clockwise by the rack 57b and the positioning arm 52 is turned counterclockwise by the rack 57d, so that both the positioning arms 51, 52 are moved from the position d to the position e.

When both the positioning arms 51, 52 are turned in the direction e, the disc Db is retracted in the X1-direction by the force resulting from the approach of the positioning pins 53, 54 fixed to the respective positioning arms 51, 52 to each other. Then, as shown in FIG. 2A, the disc Db is centered by three points, that is, the positioning pins 53, 54 at the position e and the moving member 7 at the position i and the center hole D1 of the disc Db approximately coincides with the centers of the turntable 23 and the clamper 5.

Just before the completion of the centering of the disc, the pins 39, 39 are lifted by the respective crank shapes of the driving hole 31c of the control member 31 moved in the X2-direction and the driving hole 32c of the control member 32 and the unit chassis 21 is turned upward around the support shafts 25, 25. Then, approximately simultaneously with or just after the completion of the centering of the disc Db, the center hole D1 of the disc Db is clamped between the turntable 23 and the clamper 5.

As described above, in the process from FIG. 4A and FIG. 6A to FIG. 4B and FIG. 6B, the disc Db is centered by the positioning pins 53, 54 and the moving member 7 and the clamped between the turntable 23 and the clamper 5. However, the control member 31 has been further moved a short distance by the tension of the coil spring 33 in the X2-direction at the time shown in FIG. 4B at which the centering and the clamp are finished. At the time, the lock release member 41 is a little turned clockwise from the position b by the inclining second stage hook 31d2 of the hook 31d. With this operation, the moving member 7 held to the engaging groove 41a of the lock release member 41 a little moves in the X1-direction and leaves from the clamped disc Db.

While the control member 31 slightly moves in the X2-direction from the position shown in FIG. 4B, the regulating ping 58 fixed to the control member 31 slides along the linear portion 57e3 of the regulating section 57e as shown in FIG. 6B. Therefore, the position of the associating lever 57 is unchanged from the position shown in FIG. 6B. As a result, the positioning arms 51, 52 remain at the position e. Although the disc Db is clamped by the centering force of the turntable 23 when it moves upward, the center of the disc Db is caused to coincide with the center of the turntable 23 by the centering function at the time of the clamping and the peripheral edge of the thus centered disc Db is a little separated from both the positioning pins 53, 54 and the moving member 7. Accordingly, the disc Db is turned by the spindle motor 22 without being abutted against the positioning pins 53, 54 and further against the moving member 7. Then, the signal recorded to the disc Db is read by the optical head 24.

### (Loading Operation of Cartridge C)

Next, operation when the cartridge C shown in FIG. 7A is inserted will be described.

Just after the cartridge C is inserted into the inserting port 4, the moving member 7 located at the position g in FIG. 2A is engaged with the end S1 of the shutter S. When the cartridge C is inserted by the force of hand in this state, the moving member 7 is moved along the guide 6 by being pushed. However, when the moving member 7 moves along the inclining guide portion 6a of the guide 6, the shutter S is slid in the Y1-direction by the moving component of force of the moving member 7 in the Y1- direction. When the moving member 7 reaches the inflection point 6c from the inclining guide portion 6a of the guide 6 to the linear guide portion 6b thereof, the shutter S is completely opened. Thereafter, when the cartridge C is pushed, the moving member 7 slides along the linear guide portion 6b of the guide 6 in the X1-direction.

When the moving member 7 moving along the linear guide portion 6b reaches the position h shown in FIG. 3A, it is engaged with the engaging groove 41a of the lock release member 41 at the position a. Then, the lock release member 41 is turned clockwise in accordance with the movement of the moving member 7 in the X1-direction. When the cartridge C is perfectly inserted into the cabinet 1, the moving member 7 moves to the terminal end of the guide 6 on the X1- side and the lock release member 41 is turned up to a position c.

When the lock release member 41 is turned from a position a to the position c as the cartridge C is inserted, the lock pin 44 disposed to the base of the lock release member 41 is removed from both the first stage hook 31d1 and the second stage hook 31d2 of the hook 31d of the control member 31. This process is shown in FIG. 4A to FIG. 5. With this operation, the thus unlocked control member 31 is moved in the X2-direction by the elastic force of the coil spring 33 and the control member 32 which is in synchronism therewith though the gears 35, 36 and the shaft 37 is also moved in the X2-direction by the elastic force of the coil spring 34.

When the control members 31, 32 moves in the X2-direction, the unit chassis 21 is moved upward by the crank-shaped driving holes 31c, 32c formed to the respective control members 31, 32, so that the center hole D1 of the disk Da in the cartridge C can be clamped between the turntable 23 and the clamper 5.

When the control member 31 moves in the X2-direction, the regulating ping 58 disposed to the end of the control member 31 on the X2-side is removed from the valley portion 57e1 of the regulating section 57e of the associating lever 57 and the associating lever 57 is moved in the Y2-direction by the urging force of the associating spring 59. Therefore, the positioning arm 51 is turned clockwise by the rack 57b disposed to the associating lever 57 and the positioning arm 52 turned counterclockwise by the rack 57d, so that the positioning pins 53, 54 are abutted against both the sides of the cartridge C. At the time, the positioning pins 53, 54 are elastically pressed against the cartridge C by the elastic force of the associating spring 59.

When the cartridge C is perfectly inserted into the cabinet 1 as shown in FIG. 2A, the positioning arms 51, 52 are turned to a position f and the positioning pins 53, 54 are engaged with the recesses C1, C1 of both the sides of the cartridge C to thereby position and hold the cartridge C.

The shutter S has been opened by the moving member 7 when the cartridge C is position and held as described above, and the center hole D1 of the disk Da which is exposed by opening the shutter S is clamped between the turntable 23 and the clamper 5. Then, replay operation is carried out by the optical head 24.

### (Discharge Operation)

Although the disc Db or the cartridge C is inserted by hand in the disc device as described above, its discharge operation is carried out by the power of the restoring motor 38.

When a not shown discharge operation button is depressed, the restoring motor 38 is energized, the gears 35, 36 are started by the rotational output of the restoring motor 38 and the rotational forces of them are transmitted to the racks 31b, 32b, so that the control members 31, 32 are driven in the X1-direction.

When the control member 31 is driven in the X1-direction, the regulating ping 58 disposed to the end of the control member 31 on the X2-side slides in the X1-direction along the inclining portion 57e2 of the regulating section 57e shown in FIG. 6A to thereby return the associating lever 57 in the Y1-direction and the regulating ping 58 is engaged with the valley portion 57e1 to thereby hold the associating lever 57.

When the associating lever 57 moves in the Y1-direction, the positioning arm 51 is turned counterclockwise and the positioning arm 52 is turned clockwise, so that the positioning pins 53, 54 are separated from the disc Db or the cartridge C to thereby release the disc Db or the cartridge C which has been positioned and held. Further, the unit chassis 21 is lowered by the driving holes 31c and 32c, so that the disc clamped by the turntable 23 and the clamper 5 is released.

Therefore, the disc Db or the cartridge C is pushed out from the inserting port 4 by the urging force in the X2- direction of the moving member 7 resulting from the elastic tension of the discharge spring 13 shown in FIG. 2A. While the moving member 7 moves from the terminal end in the X1- direction to the position h, the lock release member 41 is turned counterclockwise. The control member 31 is returned in the X1-direction before the lock release member 41 is turned to the position a, the lock pin 44 at the base of the lock release member 41 turned to the position a is engaged with the first stage hook 31d1 as shown in FIG. 4A, the control member 31 moves in the X1-direction and is locked at an initial position and the restoring motor 38 is stopped at the time.

As to the cartridge C, when it is discharged from the inserting port 4, the moving member 7 is returned to the position g and the shutter S is closed accordingly.

As described above, according to the present invention, when the cartridge or the single body disc is inserted, it is positioned or held by the operation of the control member executed in accordance with the insertion, whereas, when the cartridge or the single body disc is discharged, the control member is operated by the restoring motor. Therefore, the mechanism of the disc device is simplified because it suffices only to apply the power of the restoring motor to the control member.

In particular, when the disc device handles both the cartridge and the disc by such an arrangement that the locked control member is released by the movement of the cartridge or the disc and it is moved by the spring, the operation of the control member can be stated by releasing the lock by any of the cartridge and the disc.

## Claims

1. A disc device into which both a cartridge (C) in which a disc (Da) is accommodated and a single body disc (Db) which is not accommodated in a cartridge can be inserted, comprising:
a moving member (7) moved toward the inner side of the device (X1-direction) by the press force of the cartridge or the single body disc inserted from an inserting port;
an urging member (13) for urging said moving member in the direction of the inserting port;
a turntable (23) and a clamper (5) for clamping the center of the disc in the inserted cartridge or the center of the inserted single body disc;
positioning members (53,54) for positioning the cartridge or the single body disc to the turntable and the clamper;
**characterised by**:
a control member (31) for driving said positioning members in a positioning direction as well as driving said turntable or said clamper in a clamp direction by the moving force produced when the cartridge or the disc is moved in a predetermined direction at the time it is inserted; and
a restoring motor (38) for moving said control member in the direction opposite to the predetermined direction and returning it to an initial position on the completion of the drive of the disc,
wherein, when said control member (31) is returned to the initial position by said restoring motor (38), the positioning executed by said positioning members (53,54) is released as well as the clamp executed by said turntable (23) and said clamper (5) is released, whereby the cartridge or the single body disc is discharged by said moving member.

2. A disc device according to claim 1, comprising:
a spring (33) for urging said control member in the predetermined direction: and
a locking member (44) for holding said control member to the initial position against the urging force of said spring,
wherein said control member locked by said locking member is released by the moving force of the cartridge or the single body disc.

3. A disc device according to claim 2, comprising a lock release member (41) for moving said lock member in a lock releasing direction, wherein when said moving member is moved to a predetermined position on the inner side of the device, said lock release member is moved in a lock releasing direction by said moving member, whereby said control member locked by said lock member is released.

4. A disc device according to Claim 2 or 3, wherein a rack (31b) is formed to said control member, a gear driven by said restoring motor is meshed with said rack, and when said control member is driven in the predetermined direction by the elastic force of said spring, said restoring motor is deenergized, whereby said control member is moved in the predetermined direction by the elastic force of said spring without being applied with the energizing load of said restoring motor.

## Patentansprüche

1. Diskvorrichtung, in die sowohl eine Kartusche (C), in welcher eine Disk (Da) untergebracht ist, als auch eine Einzeldisk (Db), die nicht in einer Kartusche untergebracht ist, eingeführt werden können, umfassend:
ein Bewegungselement (7), welches durch die Druckkraft der Kartusche oder der Einzeldisk, die von einer Einführöffnung aus eingeführt werden, zu der Innenseite der Vorrichtung (X1-Richtung) bewegt wird;
ein Spannelement (13) zum Spannen dieses Bewegungselementes in die Richtung der Einführöffnung; einen Drehtisch (23) und eine Klammervorrichtung (5) zum Klammern des Zentrums der Disk in der eingeführten Kartusche oder des Zentrums der eingeführten Einzeldisk; Positionierelemente (53, 54) zum Positionieren der Kartusche oder der Einzeldisk gegenüber dem Drehtisch und der Klammervorrichtung;
**gekennzeichnet durch**:
ein Steuerelement (31) zum Antreiben der Positionierelemente in einer Positionierrichtung sowie zum Antreiben des Drehtisches oder der Klammervorrichtung in einer Klammerrichtung **durch** die Bewegungskraft, die erzeugt wird, wenn die Kartusche oder die Disk während des Einführens in einer vorgegebenen Richtung bewegt werden; und
einen Rückstellmotor (38) zum Bewegen des Steuerelementes in die Richtung entgegengesetzt zu der vorgegebenen Richtung und zum Zurückführen desselben in eine Anfangsposition bei der Vollendung des Antriebes der Disk,
wobei dann, wenn das Steuerelement (31) **durch** den Rückstellmotor (38) in die Anfangsposition zurückgestellt wird, die **durch** die Positionierelemente (53, 54) durchgeführte Positionierung freigegeben wird, und ebenso die **durch** den Drehtisch (23) und die Klammervorrichtung (5) ausgeführte Klammerung gelöst wird, wodurch die Kartusche oder die Einzeldisk **durch** das Bewegungselement ausgeworfen werden.

2. Diskvorrichtung nach Anspruch 1, umfassend: eine Feder
(33) zum Vorspannen des Steuerelementes in der vorgegebenen Richtung: und
ein Verriegelungselement (44) zum Halten des Steuerelementes gegen die Vorspannkraft dieser Feder bei der Anfangsposition,
wobei das durch das Verriegelungselement verriegelte Steuerelement durch die Bewegungskraft der Kartusche oder der Einzeldisk freigegeben wird.

3. Diskvorrichtung nach Anspruch 2, umfassend ein Verriegelungslöseelement (41) zum Bewegen des Verriegelungselementes in eine Verriegelungslöserichtung, wobei dann, wenn das Bewegungselement zu einer vorgegebenen Position an der Innenseite der Vorrichtung bewegt wird, das Verriegelungslöseelement durch das Bewegungselement in eine Verriegelungslöserichtung bewegt wird, wodurch das durch das Verriegelungselement verriegelte Steuerelement freigegeben wird.

4. Diskvorrichtung nach Anspruch 2 oder 3, bei welcher eine Zahnstange (31b) an dem Steuerelement ausgebildet ist, ferner ein durch den Rückstellmotor angetriebenes Zahnrad im Eingriff mit der Zahnstange ist, und dann, wenn das Steuerelement durch die elastische Kraft der Feder in die vorgegebene Richtung angetrieben wird, der Rückstellmotor antriebslos gemacht wird, wodurch das Steuerelement durch die elastische Kraft der Feder in die vorgegebene Richtung bewegt wird, ohne mit der Antriebsbelastung dieses Rückstellmotors beaufschlagt zu werden.

## Revendications

1. Appareil à disque, dans lequel à la fois une cartouche (C) dans laquelle un disque (Da) est logé et un disque à corps unique (Db) qui n'est pas logé dans une cartouche peuvent être introduits, comprenant :
un élément mobile (7) déplacé vers le côté intérieur du dispositif (direction X1) par la force de pression de la cartouche ou du disque à corps unique introduit à partir d'une ouverture d'insertion ;
un élément de sollicitation (13) destiné à solliciter ledit élément mobile dans la direction de l'ouverture d'insertion ;
un plateau tourne-disque (23) et un élément de serrage (5) destiné à serrer le centre du disque dans la cartouche introduite ou le centre du disque à corps unique introduit ;
des éléments de positionnement (53, 54) destinés à positionner la cartouche ou le disque à corps unique par rapport au plateau tourne-disque et à l'élément de serrage ;
**caractérisé par** :
un élément de commande (31) destiné à entraîner lesdits éléments de positionnement dans une direction de positionnement ainsi qu'à entraîner ledit plateau tourne-disque ou ledit élément de serrage dans une direction de serrage par la force motrice produite lorsque la cartouche ou le disque est déplacé dans une direction prédéterminée au moment où il est introduit ; et
un moteur de rappel (38) destiné à déplacer ledit élément de commande dans la direction opposée à la direction prédéterminée et à le ramener à sa position initiale à l'achèvement de l'entraînement du disque,
dans lequel, lorsque ledit élément de commande (31) est ramené à sa position initiale par ledit moteur de rappel (38), le positionnement exécuté par lesdits éléments de positionnement (53, 54) est relâché, et le serrage réalisé par ledit plateau tourne-disque (23) et ledit élément de serrage (5) est relâché, grâce à quoi la cartouche ou le disque à corps unique est déchargé par ledit élément mobile.

2. Appareil à disque selon la revendication 1, comprenant : un ressort (33) destiné à solliciter ledit élément de commande dans la direction prédéterminée, et
un élément de blocage (44) destiné à maintenir ledit élément de commande dans sa position initiale contre la force de sollicitation exercée par ledit ressort,
dans lequel ledit élément de commande bloqué par ledit élément de blocage est relâché par la force motrice de la cartouche ou du disque à corps unique.

3. Appareil à disque selon la revendication 2, comprenant un élément de relâchement de blocage (41) destiné à déplacer ledit élément de blocage dans une direction de relâchement de blocage, dans lequel, lorsque ledit élément mobile est déplacé vers une position prédéterminée sur le côté intérieur de l'appareil, ledit élément de relâchement de blocage est déplacé dans une direction de relâchement de blocage par ledit élément mobile, grâce à quoi ledit élément de commande bloqué par ledit élément de blocage est relâché.

4. Appareil à disque selon la revendication 2 ou 3, dans lequel une crémaillère (31b) est formée pour ledit élément de commande, un pignon entraîné par ledit moteur de rappel engrènant avec ladite crémaillère, et lorsque ledit élément de commande est entraîné dans la direction prédéterminée par la force élastique dudit ressort, ledit moteur de rappel est mis hors tension, grâce à quoi ledit élément de commande est déplacé dans la direction prédéterminée par la force élastique exercée par ledit ressort sans se voir appliquer la charge d'excitation dudit moteur de rappel.
